# EUROPEAN PATENT APPLICATION

(11) **EP 4 772 665 A1**
(43) Date of publication of application: **08.07.2026**
(21) Application number: 24858598.6
(22) Date of filing: 28.08.2024
(51) Int. Cl.: C22C 38/04, C22C 38/38, C22C 38/14, C21D 8/02, C23C 2/06

(54) **900 MPA-GRADE HOT-ROLLED HOT-DIP GALVANIZED STEEL PLATE AND MANUFACTURING METHOD THEREFOR**

(30) Priority: 28.08.2023 CN 202311089562
(71) Applicant: BAOSHAN IRON & STEEL CO., LTD., Shanghai 201900 (CN)
(72) Inventor: ZHANG, Yulong, Shanghai 201900 (CN); CHEN, Guang, Shanghai 201900 (CN); LUO, Shuai, Shanghai 201900 (CN); LIU, Chunsu, Shanghai 201900 (CN); JIN, Xinyan, Shanghai 201900 (CN); HE, Zhe, Shanghai 201900 (CN); WANG, Jintao, Shanghai 201900 (CN); HUANG, Caigen, Shanghai 201900 (CN); LIU, Jian, Shanghai 201900 (CN)
(74) Representative: Kuhnen & Wacker Patent- und Rechtsanwaltsbüro PartG mbB
(86) International application number: PCT/CN2024/115007
(87) International publication number: WO 2025/045064

(57) **Abstract**

Disclosed in the present invention is a 900 MPa-grade hot-rolled hot-dip galvanized steel plate which comprises a substrate and a hot-dip galvanizing layer. The substrate contains Fe and inevitable impurities, and the substrate further comprises the following chemical elements in percentage by mass: 0.06%-0.10% of C, 1.5-2.15% of Mn, 0.02-0.08% of Al, 0 < Cr ≤ 0.5%, 0.05-0.30% of Mo, 0.11-0.16% of Ti, and 0 < Nb ≤ 0.05%. The substrate does not contain Si element, and the microstructure of the substrate comprises granular bainite and second-phase particle precipitates, the volume fraction of the second-phase particle precipitates being not less than 0.2%, and the volume fraction ratio of the second-phase particle precipitates having the size not larger than 10 nm to all the second-phase particle precipitates being greater than 80%.

## Description

### Technical Field

The present disclosure relates to a steel plate and a manufacturing method therefor and particularly relates to a hot-dip galvanized steel plate and a manufacturing method therefor.

### Background Art

With the development of automotive lightweight technology, the proportion of advanced high-strength steel in automotive structural components is also increasing. Multiphase steel has become the preferred choice for chassis components such as control arms and torsion beam due to its ultra-high strength and good formability.

For chassis components with complex shapes, the steel plate is required to have good flanging and hole expansion capabilities and corrosion resistance.

The Chinese patent document with the publication number CN104513930A, published on April 15, 2015, and titled "An Ultra-high Strength Hot-rolled Multiphase Steel Plate and Strip with Good Bending and Hole Expansion Properties and A Manufacturing Method Therefor" discloses that the mass percentages of components of the ultra-high strength hot-rolled multiphase steel plate and strip with good bending properties are as follows: C: 0.07-0.14%, Si: 0.1-0.4%, Mn: 1.55-2.00%, P ≤ 0.015%, S ≤ 0.004%, Al: 0.01-0.05%, N ≤ 0.005%, Cr: 0.15-0.50%, and further comprises at least one alloying element among Nb ≤ 0.05% and Ti: 0.06-0.15%, with the balance being Fe and inevitable impurities. The patent document discloses the performance design and manufacturing method of hot-rolled pickled plates but does not involve the influence of the hot-dip galvanizing process on the properties of hot-dip galvanized steel plates.

The Chinese patent document with the publication number CN109055867A, published on December 21, 2018, and titled "A Method for Producing High Hole Expansion Hot-dip Galvanized Plate with Tensile Strength of 540 MPa" discloses a method for producing a tensile strength high hole expansion hot-dip galvanized plate, but its strength grade is only 540 MPa.

The Chinese patent document with the publication number CN113215485A, published on August 6, 2021, and titled "A 780 MPa Grade Hot-dip Coated Dual-phase Steel and A Preparation Method Therefor" discloses a 780 MPa grade hot-dip coated dual-phase steel and its manufacturing method. Its chemical composition is: C: 0.04%-0.08%, Si: 0.5%-0.8%, Mn: 1.4%-2.1%, Al: 0.02%-0.08%, Nb: 0.04-0.07%, Ti: 0.05-0.14%, Cr: 0-0.25%, Cu: 0-0.01%, Ni: 0-0.01%, B: 0-0.001%, P: 0-0.015%, S: 0-0.001%, with the balance being Fe and inevitable impurities. The Si content in this patent is relatively high, and red scale tends to form on the surface during the hot rolling process.

### Summary

One object of the present disclosure is to provide a 900MPa-grade hot-rolled hot-dip galvanized steel plate, which has high strength, high formability, and high corrosion resistance, and can be used for automotive structural components and chassis components, as well as other application fields requiring high strength, weight reduction, and corrosion resistance.

To achieve the above objective, the present disclosure provides a 900MPa-grade hot-rolled hot-dip galvanized steel plate, comprising a substrate and a hot-dip galvanized layer, the substrate comprises Fe and inevitable impurities, and the substrate further comprises the following chemical elements in mass percentage:
C: 0.060%-0.100%, Mn: 1.50-2.15%, Al: 0.020-0.080%, 0 < Cr ≤ 0.50%, Mo: 0.05-0.30%, Ti: 0.11-0.16%, and 0 < Nb ≤ 0.050%;
the substrate does not comprise Si;
a microstructure of the substrate comprises granular bainite and second-phase particle precipitates, a volume fraction of the second-phase particle precipitates is not less than 0.2%, and a volume fraction of the second-phase particle precipitates with a size of not larger than 10 nm accounts for more than 80% of the volume fraction of total second-phase particle precipitates.

Generally, to achieve ultra-high strength, the steel plate needs to be heated to a relatively high temperature in the hot-dip galvanizing process, partially or fully austenitized, and then martensite phase is formed during cooling process, thereby achieving the purpose of increasing strength. However, such a structure comprising partial martensite has poor hole expansion performance and cannot meet the forming requirements of the present disclosure. Therefore, the present disclosure optimizes and controls the chemical composition and metallographic structure, adopts Nb and Ti microalloying, a granular bainite structure is formed during hot rolling process, and then a second-phase with a sufficient volume fraction is precipitated during annealing and hot-dip galvanizing process to further strengthen the bainite structure, thereby obtaining ultra-high strength. In this process, the size of the second-phase particle precipitates needs to be strictly controlled. When the steel strip is heated to a high temperature of 600 °C or higher in the hot-dip galvanizing process, the second-phase precipitation tends to coarsen, resulting in a decrease in precipitation strengthening effect and a reduction in strength of the steel plate. To this end, the present disclosure adds Mo element to form alloy carbides with Ti and Nb microalloying elements, reducing the interfacial energy with the matrix, making the second-phase precipitation less likely to grow, maintaining a small size, and achieving ultra-high strength.

Additionally, the present disclosure adopts a silicon-free design, thus having good surface quality and corrosion resistance. In the present disclosure, when the silicon content in the steel is relatively high, the slab tends to form fayalite (2FeO-SiO₂) scale on the surface during heating process, which has an adverse effect on the surface quality of the zinc layer, thereby affecting corrosion resistance. Therefore, in order to ensure that the steel plate has good corrosion resistance while having ultra-high strength, the present disclosure adopts a silicon-free design. It should be noted that the silicon-free design means that it is not necessary to intentionally add Si element during the smelting process; since iron ore comprises a small amount of Si element, even if the finished steel plate contains a trace amount of Si element, it is an inevitable impurity of the present disclosure.

Furthermore, the precipitation of second-phase particle is a key strengthening mechanism in the present disclosure. Only when the precipitated second-phase particles have a sufficient volume fraction and a fine size can a strong strengthening effect be achieved. When the volume fraction of the second-phase particles is less than 0.2%, the tensile strength of the steel plate is less than 900 MPa. In some embodiments, the volume fraction of the second-phase particles is 0.2-0.35%. The second-phase particles precipitate at various stages of cooling; in the hot rolling process, particles precipitated during the high-temperature rolling stage are larger in size, generally 20 nm or larger, with a weak strengthening effect. Particles precipitated during cooling after coiling and heating process in the hot-dip galvanizing process have a smaller size (less than 10 nm), with a significant strengthening effect. Therefore, the present disclosure controls the volume fraction of second-phase particles with a size not larger than 10 nm to account for more than 80% of the total volume fraction of precipitates, so that the tensile strength of the steel plate reaches 900 MPa or higher. In some embodiments, the volume fraction of second-phase particles with a size not larger than 10 nm accounts for 81-95% of the total volume fraction of precipitates.

Further, in the 900MPa-grade hot-rolled hot-dip galvanized steel plate of the present disclosure, the mass percentage of each chemical element of the substrate is as follows:
C: 0.060%-0.100%, Mn: 1.50-2.15%, Al: 0.020-0.080%, 0 < Cr ≤ 0.50%, Mo: 0.05-0.30%, Ti: 0.11-0.16%, and 0 < Nb ≤ 0.05%; and a balance of Fe and inevitable impurities.

In the hot-rolled hot-dip galvanized steel plate of the present disclosure, the design principles for each chemical element are specifically described as follows:
C: In the hot-rolled hot-dip galvanized steel plate of the present disclosure, the C element is the most basic element and also the most commonly used strengthening element in the steel grade, and the level of carbon content can determine the tensile strength grade of the steel plate. The carbon element can also stabilize austenite and promote the formation of structures such as bainite; carbon and microalloying elements form sufficient precipitation strengthening phases to ensure the strength of the steel. However, an excessively high mass percentage of carbon will lead to the deterioration of formability and weldability. Therefore, in the hot-rolled hot-dip galvanized steel plate of the present disclosure, the mass percentage of the C element is controlled to be between 0.060% and 0.100%.
Mn: In the hot-rolled hot-dip galvanized steel plate of the present disclosure, manganese is a solid solution strengthening element, which can improve hardenability, delay pearlite transformation, lower the bainite transformation temperature, and refine the bainite structure. When the mass percentage of manganese is relatively low, it will result in insufficient strength. Moreover, when the mass percentage of manganese is relatively high, it will lead to a decrease in the plasticity of the steel plate and also easily lead to segregation. Therefore, in the hot-rolled hot-dip galvanized steel plate of the present disclosure, the mass percentage of Mn is controlled to be between 1.50% and 2.15%.
Al: In the hot-rolled hot-dip galvanized steel plate of the present disclosure, aluminum is a deoxidizing element of steel, which can reduce oxide inclusions in the steel, purify the steel quality, and is conducive to improving the formability of the steel plate. However, when the mass percentage of aluminum is excessively high, oxidation will occur, further affecting continuous casting production. Therefore, in the hot-rolled hot-dip galvanized steel plate of the present disclosure, the mass percentage of Al is controlled to be between 0.020% and 0.080%.
Cr: In the hot-rolled hot-dip galvanized steel plate of the present disclosure, the chromium element has the effects of improving hardenability and solid solution strengthening, can inhibit the formation of pearlite, is an element that facilitates the formation of bainite structure, and chromium element is not prone to segregation. When the mass percentage of Cr is relatively high, it will lead to an increase in cost and is also likely to produce a relatively large amount of martensite structure. Therefore, in the hot-rolled hot-dip galvanized steel plate of the present disclosure, the mass percentage of Cr is controlled to be between 0 < Cr ≤ 0.50%. In some embodiments, the mass percentage of Cr is controlled to be between 0.15% and 0.50%.
Mo: In the hot-rolled hot-dip galvanized steel plate of the present disclosure, the Mo element is a key added element. Molybdenum has the effects of improving hardenability and solid solution strengthening, can inhibit the formation of pearlite, and is an element that facilitates the formation of bainite structure. Additionally, when microalloying with Nb, V, and Ti, fine carbides or carbonitrides can form during the cooling process, playing a role in precipitation strengthening. However, these carbides or carbonitrides have a very strong tendency to coarsen, and after the size of the second-phase particles increases, the strengthening effect decreases sharply. When the Mo element is added to the steel, Mo in the second phase will partially replace the microalloying elements, thereby reducing the interfacial energy of the second phase and making the second phase less likely to grow. When the Mo content is less than 0.05%, sufficient bainite cannot be formed, and the effect of preventing the growth of the second phase is not significant. When the Mo content is greater than 0.30%, its effect tends to saturate. Therefore, in the hot-rolled hot-dip galvanized steel plate of the present disclosure, the mass percentage of Mo is controlled to be 0.05%-0.30%.
Ti: In the hot-rolled hot-dip galvanized steel plate of the present disclosure, titanium is one of the important elements of precipitation strengthening and grain refinement strengthening. Particularly during the hot-dip galvanizing and annealing process, Ti precipitates in the form of TiC, which significantly increases the strength of the ferrite matrix, and is beneficial to improving the yield ratio and increasing the elongation. When the Ti content is less than 0.11%, the tensile strength cannot reach 900 MPa, while when the Ti content is greater than 0.16%, its strengthening effect tends to saturate. From an economic perspective, the upper limit of the Ti content in the present disclosure is 0.16%. Therefore, in the technical solution of the present disclosure, the mass percentage of Ti is controlled to be 0.11-0.16%.
Nb: In the hot-rolled hot-dip galvanized steel plate of the present disclosure, niobium is one of the important elements of precipitation strengthening and grain refinement strengthening. However, when the mass percentage of Nb is higher than 0.050%, the strengthening effect of Nb approaches saturation, and the cost is relatively high. Therefore, in the high hole expansion hot-dip galvanized steel plate of the present disclosure, the mass percentage of Nb is controlled to be between 0 < Nb ≤ 0.050%. In some embodiments, the mass percentage of Nb is controlled to be between 0.010% and 0.05%.

Further, in the 900MPa-grade hot-rolled hot-dip galvanized steel plate of the present disclosure, the substrate further comprises 0 < V ≤ 0.20%.

Adding the V element can further optimize the properties of the hot-dip galvanized steel plate of the present disclosure. Among them:
V: In the hot-rolled hot-dip galvanized steel plate of the present disclosure, vanadium plays a role in precipitation strengthening and grain refinement strengthening, and the precipitation of vanadium carbides is beneficial to further increasing the strength. However, when the mass percentage of V is higher than 0.2%, the strengthening effect approaches saturation, and the cost is relatively high. Therefore, in the high hole expansion hot-dip galvanized steel plate of the present disclosure, the mass percentage of V is controlled to be between 0 < V ≤ 0.20%.

Further, among the inevitable impurities of the substrate of the 900MPa-grade hot-rolled hot-dip galvanized steel plate of the present disclosure, P ≤ 0.02%, N ≤ 0.005%, and S ≤ 0.005%.

In the hot-rolled hot-dip galvanized steel plate of the present disclosure, the P element, N element, and S element are all impurity elements in the steel. Therefore, when technical conditions permit, to obtain steel with better properties and higher quality, the content of impurity elements in the steel should be reduced as much as possible.

Further, in the 900MPa-grade hot-rolled hot-dip galvanized steel plate of the present disclosure, the volume fraction of the granular bainite is not less than 90%.

In the hot-rolled hot-dip galvanized steel plate of the present disclosure, the granular bainite structure has uniform properties and excellent hole expansion performance and simultaneously comprises a large amount of supersaturated carbon atoms. During the heating process of the annealing and hot-dip galvanizing steps of the present disclosure, these can precipitate in large quantities, thereby improving the strength and formability of the steel plate. Therefore, the microstructure in the present disclosure is mainly granular bainite. When the content of granular bainite is less than 90%, the precipitation strengthening effect is weakened, and the tensile strength cannot reach 900 MPa.

In addition to granular bainite, the 900MPa-grade hot-rolled hot-dip galvanized steel plate of the present disclosure may also comprise a small amount of ferrite and/or martensite.

Ferrite is relatively soft and has the characteristics of low strength and good plasticity. However, when the content of ferrite is relatively high, the tensile strength of the steel plate cannot reach 900 MPa. Martensite has high strength but relatively low plasticity. When the content of martensite is relatively high, cracks are prone to form at the interface between martensite and the lower-strength bainite, reducing the hole expansion rate performance of the steel plate. Therefore, the contents of martensite and ferrite need to be strictly controlled to ensure that the granular bainite content is higher than 90%.

Further, in the 900MPa-grade hot-rolled hot-dip galvanized steel plate of the present disclosure, the grain size of the granular bainite is less than 5 µm, such as 2.5-4.9 µm.

In the present disclosure, the grain size of the granular bainite has a significant impact on the yield strength. When the grain size of the granular bainite is relatively large, the yield strength is relatively low; when the grain size of the bainite is greater than 5 µm, the yield strength of the steel plate will decrease. To achieve the technical effects of the present disclosure, the grain size of the granular bainite is preferably controlled to be less than 5 µm.

Further, in the 900MPa-grade hot-rolled hot-dip galvanized steel plate of the present disclosure, its longitudinal yield strength is ≥ 780 MPa, a tensile strength is ≥ 900 MPa, an elongation A80 is ≥ 16%, and a hole expansion rate is ≥ 50%.

In some embodiments, the longitudinal yield strength of the 900MPa-grade hot-rolled hot-dip galvanized steel plate of the present disclosure is ≥ 810 MPa. In some embodiments, the longitudinal yield strength of the 900MPa-grade hot-rolled hot-dip galvanized steel plate of the present disclosure is 780-880 MPa.

In some embodiments, the tensile strength of the 900MPa-grade hot-rolled hot-dip galvanized steel plate of the present disclosure is 900-950 MPa.

In some embodiments, the elongation A80 of the 900MPa-grade hot-rolled hot-dip galvanized steel plate of the present disclosure is 16-20%.

In some embodiments, the hole expansion rate of the 900MPa-grade hot-rolled hot-dip galvanized steel plate of the present disclosure is 50-90%.

Furthermore, another object of the present disclosure is to provide a manufacturing method for a 900MPa-grade hot-rolled hot-dip galvanized steel plate. This method, in conjunction with the composition design of the present disclosure, can obtain the structural characteristics desired by the present disclosure, thereby obtaining a hot-rolled hot-dip galvanized steel plate with high strength, high formability, and high corrosion resistance.

To achieve the above object, the present disclosure provides a manufacturing method for a 900MPa-grade hot-rolled hot-dip galvanized steel plate, comprising the steps of:
obtaining a slab;
heating the slab and holding;
hot rolling, and then cooling to a coiling temperature of 440-520 °C at a cooling rate of ≥ 40 °C/s;
pickling, to obtain a pickled coil;
annealing and hot-dip galvanizing: the pickled coil is directly annealed in a combustion-type non-oxidizing continuous annealing furnace, wherein a soaking section temperature is controlled to be 630-720 °C, a soaking section holding time is controlled to be 30-120 s, and a slow cooling section temperature is controlled to be 550-670 °C; and then cooled to a hot-dip galvanizing temperature after exiting the slow cooling section.

In the present disclosure, the hot-rolled coil is water-cooled to 440-520 °C at a cooling rate of ≥ 40 °C/s and then coiled. The post-rolling cooling rate is ≥ 40 °C/s, which is to enable the hot-rolled steel plate to rapidly enter the bainite transformation region. When the cooling rate is less than 40 °C/s, a relatively large amount of ferrite or pearlite will form during the cooling process. Controlling the coiling temperature to be 440-520°C after cooling is to obtain a bainite structure. When the coiling temperature is relatively high, pearlite is likely to form, and the grain size is also relatively large, resulting in a strength of less than 900 MPa after hot-dip galvanizing and annealing. When the coiling temperature is too low, martensite will form, resulting in a hole expansion rate of less than 50%. In some embodiments, the cooling rate is 40-80 °C/s, such as 45-75 °C/s. In some embodiments, the coiling temperature is 450-500 °C.

In some embodiments, after the coiling process is completed, the hot coil may be placed in a soaking pit for slow cooling, with an average cooling rate controlled to be ≤ 15 °C/h.

In the present disclosure, the temperature of the annealing soaking section is controlled to be 630-720 °C because: when the soaking section temperature is less than 630 °C, the volume fraction of the second-phase precipitates during the soaking process is relatively low, which will result in a relatively low strength. When the soaking temperature exceeds 720 °C, martensite will produce during the cooling process, resulting in a hole expansion rate of less than 50%.

Furthermore, the present disclosure controls the holding time of the annealing soaking section to be 30-120 s because: when the holding time of the annealing soaking section is less than 30 s, the internal stress of the steel plate during the hot rolling process cannot be completely eliminated, and the surface condition of the steel plate is poor, making it difficult to obtain a good surface for hot-dip galvanizing. However, when the soaking time exceeds 120 s, the second-phase particles coarsen and dissolve in large quantities, leading to a decrease in strength and failing to ensure the yield strength of the steel plate. In some embodiments, the holding time of the annealing soaking section is 40-100 s.

In the present disclosure, the temperature of the slow cooling section is controlled to be 550-670 °C because: when the temperature of the slow cooling section is excessively high, the second-phase particles precipitated during the heating process will gradually coarsen, leading to a decrease in yield strength. Due to the limited cooling capacity of the unit in the slow cooling section, when the soaking section is 630-720 °C, it is usually difficult to cool the slow cooling section to 550°C or below.

Furthermore, after exiting the slow cooling section, the present disclosure allows for cooling to the hot-dip galvanizing temperature at a cooling rate of ≥ 5 °C/s. The present disclosure does not impose any specific limitations on this cooling rate, because in the present disclosure austenite is not formed during the soaking process and no phase transformation occurs during the cooling process. Therefore, the cooling rate after exiting the slow cooling section has no effect on the properties. A rate of ≥ 5 °C/s is the cooling rate that ensures normal operation of a conventional unit.

Further, in the manufacturing method of the present disclosure, a slab is obtained by smelting and casting. In some embodiments, the thickness of the slab is 220 mm-250 mm.

Further, in the manufacturing method of the present disclosure, the slab is heated to 1230-1280 °C and held for 1-3 h.

In the present disclosure, the heating temperature of the slab can further improve the properties and surface quality. The heating temperature is set to be ≥ 1230 °C, the purpose of which is to dissolve as much as possible the Ti (C, N) generated during the continuous casting process. The microalloy such as Ti dissolved in the austenite precipitate as nanoscale second-phase particles during hot rolling and coiling, especially during the annealing and hot-dip galvanizing process, which can effectively increase the strength of the steel plate. However, when the temperature exceeds 1280 °C, the austenite grains coarsen, which is not conducive to the toughness of the steel plate; simultaneously, the scale is relatively thick, which is not conducive to descaling, and will ultimately affect the surface quality of the hot-dip galvanizing. Therefore, the heating temperature is preferably set to be 1230-1280 °C.

Further, in the manufacturing method of the present disclosure, in the hot rolling step, the rough rolling start temperature is controlled to be 1130-1190 °C, the finish rolling start temperature is controlled to be 980-1080 °C, and the finish rolling exit temperature is controlled to be 840-940 °C.

In the hot rolling process of the present disclosure, the control of the rough rolling temperature has a significant impact on microalloy such as Ti. During the rough rolling and finish rolling processes, carbides and carbonitrides precipitate, and the size of the precipitates during this process is relatively large. When the rough rolling and finish rolling temperatures are relatively high, a large amount of precipitation occurs, which is not conducive to the improvement of the final strength. When the rough rolling and finish rolling temperatures are relatively low, the amount of microalloying elements dissolved in the austenite decreases, which is not conducive to precipitation during the cooling process. Therefore, the rough rolling start temperature is controlled to be 1130-1190 °C, and the finish rolling start temperature is controlled to be 980-1080 °C.

In the hot rolling process of the present disclosure, the exit temperature of finish rolling has a significant impact on the microstructure. A relatively low finish rolling exit can obtain pie -shaped austenite grains, which accumulate a large amount of deformation energy and are conducive to obtaining a fine grain size during the subsequent cooling process. However, when the finish rolling exit temperature is too low, ferrite phase transformation will occur, which is not conducive to formability. Therefore, the hot-rolled finish rolling exit temperature is controlled to be 840-940 °C.

In some embodiments, in some embodiments, the elongation of pickling and tension leveling may be 0.2-2%; the pickling speed may be 60-150 m/min; the temperature of the final pickling tank during the pickling process may be 80-90°C; and the iron ion concentration may be 30-40 g/L. Controlling the elongation of pickling and tension leveling to be 0.2-2% can further improve the surface quality. When the tension leveling elongation is lower than 0.2% or higher than 2%, it will have an adverse effect on the plate shape. Furthermore, a relatively low pickling speed and a relatively high tank temperature will lead to over-pickling, while a relatively high pickling speed and a relatively low tank temperature will lead to under-pickling. Both may affect the surface of the pickled plate and further affect the surface quality after hot-dip galvanizing.

In some embodiments, the pickled coil is directly annealed in a combustion-type non-oxidizing continuous annealing furnace, wherein both the direct-fired section and the heating section adopt conventional processes. In some embodiments, the temperature of the direct-fired section may be 550-660 °C. In some embodiments, the temperature of the heating section may be 630-720 °C.

Further, in the manufacturing method of the present disclosure, in the hot-dip galvanizing step, the hot-dip galvanizing temperature is 440-480 °C.

In the hot-dip galvanizing step of the present disclosure, the temperature of the hot-dip galvanizing zinc pot may be cooled to 440-480 °C. Within this temperature range, the bonding between the surface of the steel plate and the zinc bath is relatively good. Temperatures below or above this temperature range will result in poor coatability of the substrate surface and a defective surface appearance after coating. The plating bath may be a plating bath conventionally used in the art for preparing a hot-dip galvanized layer.

Further, in the manufacturing method of the present disclosure, after the hot-dip galvanizing step, it further comprises temper rolling, and the temper rolling rate is controlled to be 0.05-1.3%.

In some embodiments of the present disclosure, when the temper rolling rate is less than 0.05%, the surface quality of the zinc layer is poor. When the temper rolling rate is greater than 1.3%, significant work hardening will occur, reducing the elongation of the steel plate. Therefore, in the present disclosure, the temper rolling rate is controlled to be 0.05-1.3%. In some embodiments, the temper rolling rate is controlled to be 0.05-1.1%.

In some embodiments, the weight per side of the hot-dip galvanized layer of the present disclosure is 20-380 g/m².

In some embodiments, the thickness of the hot-dip galvanized plate of the present disclosure is 1.8-3.5 mm.

Compared with the prior art, the 900 MPa-grade hot-rolled hot-dip galvanized steel plate and its manufacturing method of the present disclosure have the following advantages and beneficial effects:
The hot-rolled hot-dip galvanized multiphase steel of the present disclosure has better corrosion resistance compared with conventional hot-rolled pickled plates, and is suitable for conventional hot continuous rolling production lines and hot-dip galvanizing production lines.

Compared with traditional manufacturing method for hot-dip galvanized steel plate, the present disclosure eliminates the cold rolling step, shortens the process flow, improves production efficiency, and saves energy.

The hot-dip galvanized steel plate of the present disclosure has the characteristics of high strength, high formability, and high corrosion resistance, wherein high formability includes high elongation and high hole expansion rate. As described above, the microstructure of the present disclosure is mainly granular bainite. During the heating process of the hot-dip galvanizing step, the dislocation density decreases, and the size of the second-phase particles is fine, which is conducive to the improvement of the hole expansion rate and elongation. Therefore, excellent hole expansion performance and elongation can be obtained. In some embodiments, its longitudinal yield strength is ≥ 780 MPa, a tensile strength is ≥ 900 MPa, an elongation A80 is ≥ 16%, and a hole expansion rate is ≥ 50%.

Thus, the present disclosure can be used as automotive body structural components and automotive chassis components and can also be used in other application fields requiring high strength, weight reduction, etc., and is particularly suitable for forming designs with complex shapes.

### Detailed Description

The 900 MPa-grade hot-rolled hot-dip galvanized steel plate of the present disclosure and the manufacturing method therefor will be further explained and illustrated below with reference to specific examples. However, such explanations and descriptions do not constitute an improper limitation on the technical solution of the present disclosure.

### Examples 1-13 and Comparative Examples 1-9

The 900 MPa-grade hot-rolled hot-dip galvanized steel plates in each embodiment of the present disclosure are all prepared by the following steps:
(1) Smelting and casting to obtain a slab with a thickness of 220 mm-250 mm. Table 1 lists the mass percentages of each chemical element in the slabs of the examples and comparative examples of the present disclosure.
(2) Heating the slab to 1230-1280°C and holding for 1-3 h.
(3) Hot rolling: controlling the rough rolling start temperature to be 1130-1190 °C, the finish rolling start temperature to be 980-1080 °C, and the finish rolling exit temperature to be 840-940 °C. During the hot rolling process, the cumulative deformation amounts of both rough rolling and finish rolling can be controlled to be ≥ 90%.
(4) After hot rolling, cooling to a coiling temperature of 440-520 °C at a cooling rate of ≥ 40 °C/s.
   In some embodiments, optionally, after the coiling process is completed, the hot coil may be placed in a soaking pit for slow cooling, with an average cooling rate of ≤ 15 °C/h.
(5) Pickling to obtain a pickled coil.

In some embodiments, the elongation of pickling and tension leveling may be 0.2-2%; the pickling speed may be 60-150 m/min; the temperature of the final pickling tank during the pickling process may be 80-90°C; and the iron ion concentration may be 30-40 g/L.

Controlling the elongation of pickling and tension leveling to be 0.2-2% can further improve the surface quality. When the tension leveling elongation is lower than 0.2% or higher than 2%, it will have an adverse effect on the plate shape. Furthermore, a relatively low pickling speed and a relatively high tank temperature will lead to over-pickling, while a relatively high pickling speed and a relatively low tank temperature will lead to under-pickling. Both may affect the surface of the pickled plate and further affect the surface quality after hot-dip galvanizing.
(6) Annealing and hot-dip galvanizing: the pickled coil is directly annealed in a combustion-type non-oxidizing continuous annealing furnace, wherein both the direct-fired section and the heating section adopt conventional processes. The soaking section temperature is controlled to be 630-720 °C, and the holding time of the soaking section is 30-120 s; and the slow cooling section temperature is 550-670 °C. After exiting the slow cooling section, it may be cooled to a hot-dip galvanizing temperature of 440-480 °C at a rate of ≥ 5 °C/s for hot-dip galvanizing, with the weight per side of the hot-dip galvanized layer being 20-380 g/m².
(7) Temper rolling: controlling the temper rolling rate to be 0.05-1.3% to obtain a hot-rolled hot-dip galvanized steel plate with a thickness of 1.8-3.5 mm.

**Table 1. (wt%, with a balance of Fe and other inevitable impurities excluding P, N and S)**

| Steel grade | C | Mn | Al | Cr | Mo | Ti | Nb | V | P | S | N |
|---|---|---|---|---|---|---|---|---|---|---|---|
| A | 0.07 | 1.74 | 0.025 | 0.48 | 0.16 | 0.15 | 0.044 | - | 0.017 | 0.004 | 0.002 |
| B | 0.1 | 1.55 | 0.071 | 0.24 | 0.30 | 0.16 | 0.035 | 0.1 | 0.008 | 0.003 | 0.003 |
| C | 0.06 | 1.83 | 0.02 | 0.35 | 0.15 | 0.13 | 0.025 | - | 0.016 | 0.003 | 0.002 |
| D | 0.07 | 1.95 | 0.046 | 0.31 | 0.15 | 0.13 | 0.011 | - | 0.005 | 0.003 | 0.004 |
| E | 0.06 | 2.04 | 0.033 | 0.25 | 0.22 | 0.12 | 0.050 | - | 0.008 | 0.004 | 0.002 |
| F | 0.09 | 2.11 | 0.064 | 0.15 | 0.16 | 0.14 | 0.017 | 0.17 | 0.009 | 0.004 | 0.003 |
| G | 0.08 | 1.7 | 0.079 | 0.37 | 0.05 | 0.11 | 0.023 | - | 0.007 | 0.003 | 0.004 |
| H | ***0.104*** | ***2.25*** | 0.054 | 0.41 | 0.17 | 0.13 | 0.044 | - | 0.019 | 0.004 | 0.004 |
| I | ***0.055*** | 1.84 | 0.04 | 0.11 | 0.14 | 0.14 | 0.045 | - | 0.008 | 0.004 | 0.005 |
| J | 0.09 | 2.03 | 0.059 | 0.34 | ***0.02*** | 0.14 | 0.045 | - | 0.016 | 0.002 | 0.003 |
| K | 0.1 | 1.59 | 0.03 | 0.19 | 0.08 | ***0.09*** | 0.045 | - | 0.013 | 0.002 | 0.004 |

| | | | | | | | | | | | |
|---|---|---|---|---|---|---|---|---|---|---|---|
| Note: In Table 1, steel grades A-G are the steel grades used in the examples of the present disclosure, while H-K are the steel grades used in the comparative examples. | | | | | | | | | | | |

Table 2 lists the specific process parameters for each example and comparative example of the present disclosure in the above process steps.

**Table 2.**

| No. | Steel grade | Hot rolling process | | | | | | Annealing and galvanizing process | | | | | | |
|---|---|---|---|---|---|---|---|---|---|---|---|---|---|---|
| | | Heating temperature (°C) and holding time (h) | Rough rolling start temperature (°C) | Finish rolling start temperature (°C) | Finish rolling exit temperature (°C) | Cooling rate after rolling (°C/s) | Coiling temperature (°C) | Direct-fired section temperature (°C) | Heating section temperature (°C) | Soaking temperature (°C) | Soaking time (s) | Slow cooling section temperature (°C) | Zinc pot temperature (°C) | Temper rolling elongation (%) |
| Ex. 1 | A | 1240×3 | 1150 | 1050 | 910 | 65 | 490 | 650 | 710 | 710 | 30 | 660 | 470 | 1.0 |
| Ex. 2 | A | 1280×1 | 1170 | 990 | 840 | 75 | 470 | 550 | 640 | 660 | 120 | 610 | 480 | 0.4 |
| Ex. 3 | A | 1230×3 | 1150 | 1030 | 860 | 45 | 500 | 600 | 700 | 710 | 80 | 660 | 450 | 0.7 |
| Ex. 4 | A | 1250×3 | 1150 | 1030 | 920 | 70 | 470 | 560 | 680 | 690 | 120 | 640 | 460 | 0.8 |
| Ex. 5 | B | 1240×3 | 1160 | 1040 | 900 | 40 | 450 | 580 | 680 | 710 | 80 | 660 | 460 | 0.5 |
| Ex. 6 | B | 1270×2 | 1130 | 980 | 860 | 75 | 510 | 580 | 630 | 630 | 120 | 550 | 480 | 0.6 |
| Ex. 7 | B | 1230×3 | 1150 | 1070 | 870 | 55 | 460 | 550 | 680 | 700 | 40 | 650 | 470 | 0.3 |
| Ex. 8 | B | 1250×3 | 1160 | 990 | 860 | 60 | 440 | 550 | 660 | 680 | 70 | 630 | 460 | 0.8 |
| Ex. 9 | C | 1270×1.5 | 1150 | 1080 | 850 | 40 | 460 | 600 | 680 | 670 | 70 | 620 | 450 | 1.3 |
| Ex. 10 | D | 1230×3 | 1190 | 1000 | 880 | 45 | 480 | 660 | 720 | 680 | 120 | 630 | 450 | 0.6 |
| Ex. 11 | E | 1280×1 | 1160 | 1080 | 940 | 40 | 500 | 620 | 700 | 720 | 90 | 670 | 460 | 0.9 |
| Ex. 12 | F | 1250×3 | 1140 | 1040 | 900 | 70 | 510 | 580 | 680 | 650 | 50 | 600 | 440 | 0.5 |
| Ex. 13 | G | 1240×2 | 1160 | 1000 | 920 | 55 | 520 | 570 | 660 | 650 | 100 | 600 | 450 | 0.05 |
| Comp. Ex. 1 | A | 1260×2 | 1190 | 1070 | 840 | 45 | 510 | 550 | 630 | ***620*** | 110 | 570 | 440 | 1.1 |
| Comp. Ex. 2 | A | 1240×3 | 1160 | 1080 | 870 | 40 | 470 | 630 | 720 | ***730*** | ***150*** | ***680*** | 440 | 0.4 |
| Comp. Ex. 3 | A | 1240×2 | 1130 | 1080 | 890 | 45 | ***530*** | 600 | 680 | 700 | 80 | 650 | 460 | 0.8 |
| Comp. Ex. 4 | A | 1240×3 | 1140 | 990 | 840 | 65 | ***420*** | 580 | 650 | 640 | 30 | 590 | 470 | 0.2 |
| Comp. Ex. 5 | B | 1240×3 | 1160 | 1050 | 940 | *35* | 490 | 600 | 680 | 660 | 100 | 610 | 480 | 12 |
| Comp. Ex. 6 | H | 1250×3 | 1160 | 1010 | 890 | 45 | 480 | 630 | 700 | 720 | 100 | 670 | 450 | 0.9 |
| Comp. Ex. 7 | I | 1240×2 | 1160 | 1030 | 860 | 50 | 520 | 600 | 650 | 660 | 80 | 610 | 460 | 0.2 |
| Comp. Ex. 8 | J | 1240×3 | 1190 | 1070 | 890 | 50 | 460 | 600 | 650 | 670 | 70 | 620 | 480 | 1.4 |
| Comp. Ex. 9 | K | 1280×1 | 1130 | 1080 | 890 | 75 | 490 | 580 | 650 | 670 | 60 | 620 | 450 | 0.2 |

The hot-rolled hot-dip galvanized steel plates obtained in Examples 1-13 and Comparative Examples 1-9 are sampled separately, and the microstructure is observed using optical microscopy and scanning electron microscopy. The grain size is measured using the equivalent area method. The size distribution and volume fraction of the second-phase precipitates are measured using the extraction carbon replica method, and the test results are listed in Table 3.

**Table 3.**

| No. | Steel grade | Microstructure | | Second-phase particles | |
|---|---|---|---|---|---|
| | | Volume fraction of granular bainite (%) | Grain size of granular bainite (µm) | Volume fraction (%) | Volume fraction ratio of particles ≤ 10 nm (%) |
| Ex. 1 | A | 94 | 2.6 | 0.21 | 88 |
| Ex. 2 | A | 92 | 3.4 | 0.35 | 85 |
| Ex. 3 | A | 92 | 3.5 | 0.27 | 94 |
| Ex. 4 | A | 92 | 4.2 | 0.25 | 86 |
| Ex. 5 | B | 92 | 3 | 0.21 | 95 |
| Ex. 6 | B | 93 | 3.3 | 0.25 | 92 |
| Ex. 7 | B | 91 | 4.5 | 0.34 | 81 |
| Ex. 8 | B | 94 | 4.9 | 0.27 | 86 |
| Ex. 9 | C | 92 | 3.3 | 0.29 | 82 |
| Ex. 10 | D | 93 | 3.9 | 0.29 | 87 |
| Ex. 11 | E | 94 | 3.6 | 0.20 | 88 |
| Ex. 12 | F | 94 | 3.9 | 0.26 | 94 |
| Ex. 13 | G | 96 | 4.7 | 0.26 | 87 |
| Comp. Ex. 1 | A | 94 | 4.4 | ***0.18*** | 91 |
| Comp. Ex. 2 | A | ***82*** | 3 | 0.32 | ***61*** |
| Comp. Ex. 3 | A | ***88*** | 2.5 | 0.25 | ***73*** |
| Comp. Ex. 4 | A | ***85*** | 3.8 | 0.29 | 92 |
| Comp. Ex. 5 | B | ***80*** | 4.5 | 0.23 | 84 |
| Comp. Ex. 6 | H | ***84*** | 3.9 | 0.27 | 81 |
| Comp. Ex. 7 | I | 94 | 3.5 | ***0.18*** | 89 |
| Comp. Ex. 8 | J | 94 | 5 | 0.24 | ***70*** |
| Comp. Ex. 9 | K | 95 | 4.6 | ***0.15*** | 87 |

Furthermore, for the samples of each Example and Comparative Example, longitudinal JIS 13B tensile specimens are taken to determine the yield strength and tensile strength, with a gauge length of 80 mm. The mechanical property tests are performed in accordance with the GB/T 228.1-2010 standard. The hole expansion rate tests are tested in accordance with the GB/T 24524-2021 standard, and the test results of the above tests are listed in Table 4.

**Table 4.**

| No. | Steel grade | Mechanical properties | | | |
|---|---|---|---|---|---|
| | | Yield strength Rp0.2 (MPa) | Tensile strength Rm (MPa) | Elongation A80 (%) | Hole expansion rate (%) |
| Ex. 1 | A | 817 | 941 | 19.7 | 83.8 |
| Ex. 2 | A | 877 | 918 | 17.2 | 53 |
| Ex. 3 | A | 793 | 929 | 17.1 | 65.6 |
| Ex. 4 | A | 874 | 948 | 16.5 | 89.8 |
| Ex. 5 | B | 854 | 941 | 18.4 | 73 |
| Ex. 6 | B | 799 | 948 | 16.9 | 84.8 |
| Ex. 7 | B | 827 | 902 | 17.9 | 79 |
| Ex. 8 | B | 857 | 904 | 19.3 | 64.2 |
| Ex. 9 | C | 879 | 947 | 19.8 | 76 |
| Ex. 10 | D | 875 | 931 | 16.8 | 64.9 |
| Ex. 11 | E | 862 | 902 | 17.1 | 59.9 |
| Ex. 12 | F | 813 | 910 | 19.4 | 85 |
| Ex. 13 | G | 867 | 945 | 17.9 | 51.2 |
| Comp. Ex. 1 | A | ***765*** | ***886*** | 17 | 64.2 |
| Comp. Ex. 2 | A | ***740*** | 991 | 15.4 | ***35.2*** |
| Comp. Ex. 3 | A | ***753*** | ***880*** | 17.4 | 53.7 |
| Comp. Ex. 4 | A | 787 | 925 | 18.2 | ***43.6*** |
| Comp. Ex. 5 | B | 819 | ***892*** | 17.8 | ***40*.*3*** |
| Comp. Ex. 6 | H | 821 | 943 | 17.9 | ***47.6*** |
| Comp. Ex. 7 | I | ***676*** | ***761*** | 16.8 | 82.8 |
| Comp. Ex. 8 | J | ***760*** | ***847*** | ***15.5*** | ***45.7*** |
| Comp. Ex. 9 | K | ***754*** | ***879*** | 18.9 | 58.6 |

As shown in Tables 3 and 4, through reasonable chemical element composition design, combined with optimized hot rolling process, and annealing and hot-dip galvanizing process, Examples 1-17 of the present disclosure have achieved ideal structural characteristics, refined grain sizes, and promoted the massive precipitation of second-phase particles through annealing and hot-dip galvanizing heating process to enhance strength without reducing plasticity. During the annealing process, temperatures in each section are strictly controlled to avoid coarsening of second-phase particles, thereby achieving good properties. The yield strength obtained finally in each embodiment of the present disclosure is ≥ 793 MPa, a tensile strength is ≥ 902 MPa, an elongation A80 is ≥ 16.5%, and a hole expansion rate is ≥ 51.2%.

In contrast to the present disclosure, because the components or process parameters of each comparative example do not meet the design requirements of the present disclosure, they cannot achieve the technical effects achievable by this disclosure. Among them:
Comparative Example 1: Since the annealing soaking temperature is lower than the lower limit of the present disclosure, precipitation of the second phase is less during the hot-dip galvanizing annealing process, and strength reduces.
Comparative Example 2: Since the annealing soaking section temperature is higher than the upper limit of the present disclosure, austenite is formed during the heating process, which transforms into martensite during the cooling process, the bainite proportion is reduced, and the yield strength of the steel plate decreases.
Comparative Example 3: Since the coiling temperature is higher than the upper limit of the present disclosure, the ferrite content is higher and the bainite content is lower. In addition, higher coiling temperatures lead to more precipitation of the second phase, and the second-phase particles tend to coarsen during the heating process of hot-dip galvanizing, resulting in reduced strength.
Comparative Example 4: Since the coiling temperature is lower than the lower limit of the present disclosure, the martensite content in the hot coil is higher and the bainite content is lower, resulting in a decrease in the hole expansion rate of the steel plate.
Comparative Example 5: Since the cooling rate after rolling is lower than the lower limit of the present disclosure, the bainite content is reduced, the strength is reduced, and the hole expansion rate is insufficient.
Comparative Example 6: Since the carbon content and manganese content are higher than the upper limits of the present disclosure, more martensite is formed during the hot rolling process, resulting in less bainite content and a reduced hole expansion rate.
Comparative Example 7: Since the C content is lower than the lower limit of the present disclosure, the strength is insufficient.
Comparative Example 8: Since the Mo content is lower than the lower limit of the present disclosure, the second-phase particles coarsen during the heating process of hot-dip galvanizing, the precipitation strengthening effect is weakened, the strength of the steel plate is reduced, and the hole expansion rate is lower than 50%.
Comparative Example 9: Since the Ti content is lower than the lower limit of the present disclosure, the precipitation amount of the second-phase particles is less, resulting in lower strength.

It should be noted that the combination of the various technical features in this case is not limited to the combination described in the claims of this case or the combination described in the specific embodiments. All technical features described in this case can be freely combined or combined in any way unless there is a contradiction between them.

It should also be noted that the examples listed above are only specific examples of the present disclosure. Obviously, the present disclosure is not limited to the above examples. Similar changes or modifications made therewith are directly derived from the contents disclosed in the present disclosure or can be easily associated with by those skilled in the art and should all fall within the scope of protection of the present disclosure.

## Claims

1. A hot-dip galvanized steel plate having a tensile strength of ≥ 900 MPa, comprising a substrate and a hot-dip galvanized layer, the substrate comprises Fe and inevitable impurities, wherein the substrate further comprises the following chemical elements in mass percentage:
C: 0.060%-0.100%, Mn: 1.50-2.15%, Al: 0.020-0.080%, 0 < Cr ≤ 0.50%, Mo: 0.05-0.30%, Ti:
0.11-0.16%, and 0 < Nb ≤ 0.050%;
the substrate does not comprise Si;
a microstructure of the substrate comprises granular bainite and second-phase particle precipitates, a volume fraction of the second-phase particle precipitates is not less than 0.2%, and a volume fraction of the second-phase particle precipitates with a size of not larger than 10 nm accounts for more than 80% of a volume fraction of total second-phase particle precipitates.

2. The hot-dip galvanized steel plate according to claim 1, wherein the mass percentage of each chemical element of the substrate is as follows:
C: 0.060%-0.100%, Mn: 1.50-2.15%, Al: 0.020-0.080%, 0 < Cr ≤ 0.50%, Mo: 0.05-0.30%, Ti: 0.11-0.16%, and 0 < Nb ≤ 0.050%; and a balance of Fe and inevitable impurities.

3. The hot-dip galvanized steel plate according to claim 1 or 2, wherein the substrate further comprises 0 < V ≤ 0.20%.

4. The hot-dip galvanized steel plate according to claim 1 or 2, wherein among the inevitable impurities of the substrate: P ≤ 0.02%, N ≤ 0.005%, and S ≤ 0.005%.

5. The hot-dip galvanized steel plate according to claim 1 or 2, wherein a volume fraction of the granular bainite is not less than 90%, and/or a grain size of the granular bainite is less than 5 µm.

6. The hot-dip galvanized steel plate according to claim 1 or 2, wherein a weight per side of the hot-dip galvanized layer is 20-380 g/m2.

7. The hot-dip galvanized steel plate according to claim 1 or 2, wherein a volume fraction of second-phase particles is 0.2-0.35%, and/or a volume fraction of second-phase particles with a size not larger than 10 nm accounts for 81-95% of a total volume fraction of precipitates.

8. The hot-dip galvanized steel plate according to claim 1 or 2, wherein its longitudinal yield strength is ≥ 780 MPa, a tensile strength is ≥ 900 MPa, an elongation A80 is ≥ 16%, and a hole expansion rate is ≥ 50%.

9. The hot-dip galvanized steel plate according to claim 1 or 2, wherein its longitudinal yield strength is 780-880 MPa, a tensile strength is 900-950 MPa, an elongation A80 is 16-20%, and a hole expansion rate is 50-90%.

10. A manufacturing method for the hot-dip galvanized steel plate according to any one of claims 1 to 9, comprising the steps of:
obtaining a slab;
heating the slab and holding;
hot rolling, then cooling to a coiling temperature of 440-520 °C at a cooling rate of ≥ 40 °C/s and coiling;
pickling, to obtain a pickled coil;
annealing and hot-dip galvanizing: the pickled coil is directly annealed in a combustion-type non-oxidizing continuous annealing furnace, wherein a soaking section temperature is controlled to be 630-720 °C, a soaking section holding time is controlled to be 30-120 s, and a slow cooling section temperature is controlled to be 550-670 °C; and then cooled to a hot-dip galvanizing temperature after exiting a slow cooling section.

11. The manufacturing method according to claim 10, wherein a slab is heated to 1230-1280 °C and held for 1-3 h.

12. The manufacturing method according to claim 10, wherein in the hot rolling step, a rough rolling start temperature is controlled to be 1130-1190 °C, a finish rolling start temperature is controlled to be 980-1080 °C, and a finish rolling exit temperature is controlled to be 840-940 °C.

13. The manufacturing method according to claim 10, wherein in the annealing step, a temperature of direct-fired section is 550-660 °C and a temperature of heating section is 630-720 °C; and/or, in the hot-dip galvanizing step, a hot-dip galvanizing temperature is 440-480 °C.

14. The manufacturing method according to claim 10, wherein after the hot-dip galvanizing step it further comprises temper rolling, and a temper rolling rate is controlled to be 0.05-1.3%.

15. The manufacturing method according to claim 10, wherein in the hot rolling step, cooling is performed to a coiling temperature at a cooling rate of 40-80 °C/s; and/or, after the coiling process is completed, a hot coil is placed in a soaking pit for slow cooling, with an average cooling rate controlled to be ≤ 15 °C/h; and/or, an elongation of pickling and tension leveling is 0.2-2%, preferably, a pickling speed is 60-150 m/min, and a temperature of a final pickling tank during the pickling process is 80-90 °C, and an iron ion concentration is 30-40 g/L.
